# EUROPEAN PATENT APPLICATION

(11) **EP 4 782 950 A1**
(43) Date of publication of application: **29.07.2026**
(21) Application number: 25223936.3
(22) Date of filing: 16.12.2025
(51) Int. Cl.: G05D 1/224, G05D 1/226, G05D 1/622

(54) **SYSTEMS AND METHODS FOR REMOTE DRIVING OF VEHICLES**

(30) Priority: 24.01.2025 FI 20255049
(71) Applicant: Unikie Oy, 33720 Tampere (FI)
(72) Inventor: Sormunen, Toni, 33880 Lempäälä (FI)
(74) Representative: Moosedog Oy

(57) **Abstract**

A digital twin of an operational area (110) is created. Information pertaining to an initial position and a target position of a vehicle (102, 202, 302, 402a-c) is received. Routing information of the vehicle is determined. The routing information and the digital twin are sent to an operator unit (106). The vehicle is navigated based on command(s) received from the operator unit. A safety zone (114) for the vehicle is determined. Information pertaining to a network latency in a communication network (112) is obtained. It is detected when a change in the network latency exceeds a predetermined threshold latency. When this happens, a size of the safety zone is increased. It is detected when a position of an object (116) present in the operational area lies within the safety zone. When this happen, a speed of the vehicle is decreased.

## Description

### TECHNICAL FIELD

The present disclosure relates to systems for remote driving of vehicles. Moreover, the present disclosure relates to methods for remote driving of vehicles. Furthermore, the present disclosure relates to computer program products for remote driving of vehicles.

### BACKGROUND

Nowadays, remote driving vehicle is an emerging technology that enables a vehicle to be controlled from a distance, often in environments such as ports, warehouses, restricted areas, and similar. In these environments, the vehicle must navigate predefined routes, avoiding obstacles, pedestrians, and other hazards while performing tasks for example, such as loading, unloading, transporting goods, and similar. A primary challenge in remote driving is ensuring timely and accurate control of the vehicle, which requires a reliable communication between the vehicle and an operator. However, communication delays in data transmission pose a significant risk to safety and efficiency of remote driving operations. For example, a high network latency can cause delays in decision making and vehicle responses, leading to an increased risk of accidents, collisions, and similar, particularly when quick reactions are required. In remote vehicle driving, a communication latency generally exists and during remote vehicle driving, the vehicle needs time to recognize a danger (for example, a potential collision) and a time to start its operation after brake application increases, as compared to a case of direct driving in which a physical user is present in the vehicle.

Conventionally, existing solutions to the problem of network latency in remote driving vehicle often rely on high-speed communication networks (such as a 5G network) designed to minimize delays. However, such advancements have improved an efficiency of controlling the remote driving vehicle in certain contexts, but still do not fully address safety concerns posed by a high communication latency. In particular, while high-speed networks can reduce delays, they do not account for a dynamic nature of network conditions, where the network latency can fluctuate unpredictably due to congestion, signal interference, or other factors.

Therefore, in light of the foregoing discussion, there exists a need to overcome the aforementioned drawbacks.

### SUMMARY

The aim of the present disclosure is to provide a system and a method for remote driving of a vehicle to ensure safe (namely, collision-free or accident-free), efficient, and precise operation of the vehicle within an operational area. The aim of the present disclosure is achieved by a system and a method for remote driving of a vehicle, as defined in the appended independent claims to which reference is made to. Advantageous features are set out in the appended dependent claims.

The system and method incorporate dynamically adjustable safety zones and routing capabilities that account for real-time variations in network latency and environmental conditions. This adaptability ensures reliable and consistent vehicle operation under diverse scenarios.

The embodiments of the present disclosure substantially enable to improve operational safety, navigation efficiency, and responsiveness to varying network and environmental conditions.

Additional aspects, advantages, features, and objects of the present disclosure would be made apparent from the drawings and the detailed description of the illustrative embodiments constructed in conjunction with the appended claims that follow.

Throughout the description and claims of this specification, the words *"comprise", "include", "have",* and *"contain"* and variations of these words, for example *"comprising"* and *"comprises",* mean *"including but not limited to",* and do not exclude other components, items, integers, or steps not explicitly disclosed also to be present. Moreover, the singular encompasses the plural unless the context otherwise requires. In particular, where the indefinite article is used, the specification is to be understood as contemplating plurality as well as singularity, unless the context requires otherwise.

### BRIEF DESCRIPTION OF THE DRAWINGS

FIG. 1 illustrates a block diagram of an architecture of a system for remote driving of a vehicle, in accordance with an embodiment of the present disclosure;
FIG. 2 illustrates an exemplary process flow in a system for remote driving a vehicle, in accordance with an embodiment of the present disclosure;
FIG. 3 illustrates an an exemplary process flow of a vehicle control module in a system for remote driving a vehicle, in accordance with an embodiment of the present disclosure;
FIG. 4 illustrates an exemplary visualization of an interactive user interface rendered on a display of an operator unit, in accordance with an embodiment of the present disclosure; and
FIG. 5 illustrates steps of a method for remote driving of a vehicle, in accordance with an embodiment of the present disclosure.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a system for remote driving of a vehicle, wherein the system comprises:
a plurality of sensors arranged in an operational area in which the vehicle is present;
an operator unit; and
a control unit communicably coupled to the plurality of sensors, the operator unit, and the vehicle, via a communication network, wherein the control unit is configured to:
   process tracking data, collected by the plurality of sensors, to create a digital twin of the operational area;
   receive, from the operator unit, information pertaining to an initial position and a target position of the vehicle;
   determine routing information of the vehicle, based on the digital twin of the operational area and the information pertaining to the initial position and the target position of the vehicle;
   send the routing information of the vehicle and the digital twin of the operational area to the operator unit;
   navigate the vehicle based on at least one command received from the operator unit;
   determine a safety zone for the vehicle, based on at least one vehicle parameter, wherein the safety zone surrounds the vehicle;
   obtain, for a given time period, information pertaining to a network latency in the communication network from a network traffic regulator of the communication network;
   detect when a change in the network latency for the given time period exceeds a predetermined threshold latency;
   when it is detected that a change in the network latency for the given time period exceeds a predetermined threshold latency, increase a size of the safety zone, based on the change in the network latency;
   detect when a position of an object present in the operational area lies within the safety zone; and
   when it is detected that a position of an object present in the operational area lies within the safety zone, decrease a speed of the vehicle to prevent a collision between the vehicle and the object.

In a second aspect, the present disclosure provides a method for remote driving of a vehicle, wherein the method comprises:
processing tracking data, collected by a plurality of sensors, to create a digital twin of an operational area in which the vehicle is present;
receiving information pertaining to an initial position and a target position of the vehicle;
determining routing information of the vehicle, based on the digital twin of the operational area and the information pertaining to the initial position and the target position of the vehicle;
sending the routing information of the vehicle and the digital twin of the operational area to an operator unit;
navigating the vehicle based on at least one command received from the operator unit;
determining a safety zone for the vehicle, based on at least one vehicle parameter, wherein the safety zone surrounds the vehicle;
obtaining, for a given time period, information pertaining to a network latency in a communication network from a network traffic regulator of the communication network;
detecting when a change in the network latency for the given time period exceeds a predetermined threshold latency;
when it is detected that a change in the network latency for the given time period exceeds a predetermined threshold latency, increasing a size of the safety zone, based on the change in the network latency;
detecting when a position of an object present in the operational area lies within the safety zone; and
when it is detected that a position of an object present in the operational area lies within the safety zone, decreasing a speed of the vehicle to prevent a collision between the vehicle and the object.

In a third aspect, the present disclosure provides a computer program product comprising a non-transitory machine-readable data storage medium having stored thereon program instructions that, when executed by a processor, cause the processor to execute steps of the method of the second aspect.

The present disclosure provides the aforementioned system and the aforementioned method for remote driving of the vehicle. Herein, by utilizing the plurality of sensors to create the digital twin of the operational area, the system ensures an accurate and real-time tracking of surroundings of the vehicle. The digital twin enables the operator unit and the control unit to make well-informed decisions about navigation of the vehicle remotely, significantly improving situational awareness and operational efficiency. Determining the routing information ensures efficient navigation while accounting for a current layout and conditions of the operational area, reducing an unnecessary travel time and energy consumption of the vehicle. Moreover, an inclusion of dynamically adjusting the safety zone around the vehicle provides an adaptive safety mechanism. In this regard, by increasing the size of the safety zone when the network latency exceeds the predetermined threshold, the system and the method effectively accounts for communication delays, ensuring the vehicle operates safely under varying network conditions. If the object enters the safety zone, the control unit of the system proactively reduces the speed of the vehicle to prevent collisions or accidents. Beneficially, such a real-time adjustment of the speed of the vehicle in remote driving enhances an operational safety, even in complex and dynamic environments. The system and the method are susceptible to detect changes in the network latency and respond appropriately to ensure reliability of operations for remote driving of the vehicle. By adapting a navigational behavior of the vehicle to fluctuations of the network latency, the system and the method ensures safe and predictable control even during periods of high network delay. This is facilitated by a seamless collaboration between the operator unit and the control unit, thereby improving an operational workflow of the vehicle. The system and the method facilitate reliable and efficient remote driving of the vehicle by integrating real-time tracking, adaptive safety mechanisms, and latency-aware adjustments, thereby ensuring enhanced navigation accuracy, operational safety, and responsiveness to dynamic environmental and network conditions. The system and the method are fast, robust, easy to implement, and facilitates reliable, real-time remote driving of the vehicle.

The term *"remote driving"* refers to a process in which the vehicle is controlled by the control unit using the communication network to transmit commands and receive feedback. The vehicle may be controlled from a remote location. The remote driving is often used in scenarios where a direct human control is not feasible or safe, such as hazardous environments or complex operational areas. Notably, the vehicle is configured to operate without any components of the system installed within the vehicle that are required for remote driving functionality. For example, the system for remote driving of the vehicle can be applied to any brand-new vehicle coming off a car factory production line without requiring any modifications or additional components to be installed in the vehicle.

Throughout the present disclosure, the term *"operational area"* refers to a defined physical space or a controlled real-world environment within which the vehicle (which is remotely controlled) operates. The operational area comprises all regions where the vehicle may travel or navigate and is monitored by the plurality of sensors. Notably, the operational area encompasses a static object (for example, such as a restricted area, a port, a warehouse, a construction site, a logistic yard, a depot, a factory, a pathway, a barrier, a traffic cone, a parked vehicle and similar), a dynamic object (for example, such as a pedestrian, a moving object, other vehicle, and similar), and the like. The operational area is defined by physical boundaries and is equipped with the necessary infrastructure to support for remote driving of the vehicle. The operational area may be restricted to an authorized person and the vehicle only, to ensure a controlled environment free from unexpected interference. Moreover, the operational area may have predefined routes or paths along which the vehicle is expected to travel. Additionally, the operational area may include environmental control units, such as a lighting unit, a weather monitoring unit, and the like, to ensure optimal operating conditions. In this regard, the plurality of sensors are arranged in a manner that an entirety of the operational area is covered, thereby ensuring a continuous detection and/or tracking of the object present in the operational area. The plurality of sensors detects the operation of the vehicle in a real-time and sends the collected data to the control unit via the communication network. Examples of the plurality of sensors may include, but are not limited to, light detection and ranging (LiDAR) sensors, radar sensors, ultrasonic sensors, inertial measurement unit sensors, and optical sensors.

In this regard, the plurality of sensors are installed in an infrastructure within the operational area for example such as walls, ceilings, boundaries, and similar. Optionally, one or more scaffolding structures are used for mounting the plurality of sensors at sufficient height in outdoor, when there is no suitable equipment or place within the operational area for deploying. Optionally, layout (such as height, placement, and overall number) of the plurality of sensors is dependent on multiple factors such as area size, controlled vehicle size, other moving object size, minimum detectable object size requirement, redundancy requirements, or similar. Optionally, the plurality of sensors uses a gigabit ethernet and mains power (for example 230 Volt) for communicating with the communication network. It will be appreciated that the arrangement of the plurality of sensors to cover an entirety of the operational area ensures uninterrupted real-time detection and tracking of the object. This facilitates an accurate situational awareness and enhances safety of remote driving operations of the vehicle. It will also be appreciated that defining physical boundaries and restricting access to the vehicle creates a controlled environment. This minimizes the likelihood of unexpected interference and ensures safe and reliable operation.

Optionally, a given sensor from amongst the plurality of sensors is a Light Detection and Ranging (LiDAR) sensor. In this regard, the LiDAR sensor detects spatial information from the operational area. Notably, the term *"spatial information"* refers to an information about a location and an orientation of the vehicle as well as the object in a physical space. In this regard, the data captured by the LiDAR sensor is processed and based on said data, one or more three-dimensional (3D) models of the operational area are generated by capturing the spatial information of the vehicle, and the object with high resolution. This capability not only allows the system to map the static object but also allows to detect, classify, and track the dynamic object. The LiDAR sensor enables the system to perceive the operational area in real-time by managing multiple LiDAR sensors and processing a generated point cloud data, which is being captured by the LiDAR sensor. This data is then transformed, filtered, and cleared from background noise. The remaining points are grouped into clusters representing individual objects. In this regard, each object is tracked using a generic Kalman filter state estimator, which predicts and updates position and motion of the object over time. Notably, at least two LiDAR sensors detect all the objects in the operational area. Moreover, the tracking data may comprise visual information pertaining to several different objects in the operational area, such as controlled vehicles, dynamic objects, semi-static objects, and static objects. In this regard, when processing the tracking data, specific metrics are taken into account for classifying the several different objects into different categories. Such specific metrics may, for example, be a pose output frequency, a position of any object in a two-dimensional plane (i.e., X-Y coordinates), and a heading error. For example, the pose output frequency of any object may be 10 Hertz (which means that a position and an orientation of any object may be updated 10 times per second), position of any object on a two-dimensional plane may range from 50 millimetres to 300 millimetres, and the heading error (i.e., facing deviation in a direction of any object) may range from 2 degrees to 10 degrees. The principle of operation of LiDAR sensors are well-known in the art. It will be appreciated that high-resolution 3D models generated by the LiDAR sensor significantly enhance situational awareness of the system, enabling the vehicle to make informed decisions in real-time. Additionally, the data captured by the LiDAR sensor can be integrated with the system to update it dynamically, ensuring that the operational area is represented accurately even under changing conditions. It will also be appreciated that the use of the LiDAR sensor allows for adaptive navigation and obstacle avoidance. The system can utilize the spatial information to calculate safe and efficient routes, identify potential hazards, and take corrective actions such as altering a path, a speed of the vehicle, and the like. This ensures that the vehicle operates safely and efficiently even in complex and dynamic environments. A technical effect of utilizing the LiDAR sensor is that it captures high-resolution spatial information, facilitating an accurate detection, classification, and tracking of the object in real-time.

Throughout the present disclosure, the term *"operator unit"* refers to a centralized unit that controls the system for remotely driving the vehicle. The operator unit (namely, an operator backend) is responsible for issuing commands to the vehicle, including determining which vehicle to move, where to move it, and specifying a route or a path to be followed, or similar. Specifically, for each vehicle operating within the operational area, the operator unit integrates with existing operations (for example, such as factory enterprise resource planning or other management systems) to direct one or more marshalling operations. Thus, the operator unit facilitates coordination of movement of the vehicle, guiding it along the predefined routes or paths within the operational area, ensuring efficient and safe navigation in accordance with requirements of the system.

Throughout the present disclosure the term *"control unit"* refers to a central control module that manages an interaction between the vehicle, the plurality of sensors, and the operator unit. The control unit is configured to process data received from the plurality of sensors, analyse operational parameters, and execute control functions for managing movement and operation of the vehicle. The control unit performs tasks for example, such as navigation, collision avoidance, trajectory planning, and similar, by processing real-time data and implementing control commands. The control unit is communicably coupled to the plurality of sensors, the operator unit, and the vehicle, via the communication network (for example, such as a cellular network, a Wi-Fi network, a satellite network, and similar).

Throughout the present disclosure, the term *"digital twin"* refers to a dynamic, virtual representation of the operational area, which is continuously updated with real-time data collected from the plurality of sensors. Herein, the digital twin provides real-time spatial information of objects in the operational area. It is to be understood that the digital twin is a digital map of the operational area. Such a digital map could be in a form of a three-dimensional model of the operational area. The term *"tracking data"* refers to an information generated and collected by the plurality of sensors that provides positional and movement details of objects, the vehicle, and the like, within the operational area. The tracking data may include, but are not limited to, a real-time location of the vehicle, a velocity of the vehicle, an acceleration of the vehicle, a trajectory of the vehicle and other dynamic elements, such as obstacles, moving objects, environmental features, and similar. The tracking data is essential for creating an accurate digital twin of the operational area, enabling the control unit to process and analyse information for decision-making, route optimization, and safety mechanisms. The tracking data is communicated to the control unit via the communication network for further processing and integration into the system's operation. Based on the tracking data as given by the plurality of sensors, the digital twin is created, wherein the digital twin comprises the one or more 3D models of the layout of the operational area, such as geometry of roads, intersections, buildings, and similar. It will be appreciated that integration of the tracking data into creation of the digital twin enhances ability of the system to maintain an accurate and up-to-date virtual representation of the operational area, thereby supporting real-time decision-making and route optimization. It will also be appreciated that continuous update of the digital twin with the tracking data ensures that the system can adapt to changes in the operational area, thereby facilitating dynamic and safe navigation for the vehicle. Furthermore, it will be appreciated that by using the 3D model of the operational area within the digital twin, the system can improve its spatial awareness and object detection capabilities, leading to a more precise control and better safety measures for operations of the vehicle in complex or constrained environments.

Once the digital twin is created, the control unit receives information pertaining to the initial position of the vehicle and the target position of vehicle from the operator unit via the communication network. In this regard, the initial position is often derived from current location of the vehicle, which is obtained through the tracking data collected by the plurality of sensors. Similarly, the target position is provided by the operator unit based on a task or a mission the vehicle within the operational area. This communication allows the control unit to seamlessly integrate real-time data and predefined positions, enabling the system to plan optimal route for the vehicle. It will be appreciated that this feature enables for precise, real-time navigation of the vehicle, ensuring that the vehicle moves from its initial position to the target position safely and efficiently. Moreover, it facilitates dynamic path planning by accounting for obstacles or environmental changes detected in the real-time, thus enhancing ability of the vehicle to adapt to evolving conditions within the operational area.

Throughout the present disclosure, the term *"routing information"* refers to an information and/or instructions generated by the control unit to define an optimal route or a trajectory for the vehicle to follow within the operational area. The routing information is derived from analysis of the digital twin of the operational area, which includes the layout of roads, obstacles, dynamic elements, and similar, alongside the initial position and the target position of the vehicle. The routing information may include, but are not limited to, details such as specific path to follow, directions, waypoints, speed limits, adjustments required to avoid obstacles, and hazardous conditions. Herein, the control unit, after receiving the initial position of the vehicle and the target position of the vehicle, the control unit is configured to process the routing information in conjunction with the digital twin of the operational area to determine the predefined route for the vehicle. This information is used by the vehicle to navigate autonomously to its target position while ensuring safety, efficiency, and real-time adaptation to environmental changes. The routing information also comprises the real-time data from the plurality of sensors, providing continuous updates to adapt to shifting conditions within the operational area. A technical effect of determining the routing information is that it enables the vehicle to autonomously navigate through the operational area with optimized efficiency and safety, accounting for real-time changes and obstacles. This allows for an accurate path planning, reduces risk of collisions, and ensures that the vehicle will reach its target position while adapting to dynamic conditions in the environment.

Once the routing information is determined for the vehicle based on the digital twin, the initial position of the vehicle and the target position of the vehicle, the control unit is configured to send the routing information along with updated digital twin of the operational area to the operator unit. This allows the operator unit to receive a real-time, an accurate data of the vehicle's planned path and current state of the operational environment. By receiving both the routing information and the digital twin, the operator unit can monitor a progress of the vehicle, intervene if necessary, and ensure that operations are executed as intended. A technical effect is that it facilitates enhanced situational awareness for the operator unit, enabling more informed decision-making, dynamic route adjustments, and quicker responses to any unexpected changes or obstacles within the operational area. Additionally, it ensures seamless coordination between the vehicle and the operator unit, thereby optimizing overall efficiency and safety of the system.

Optionally, the control unit is configured to dynamically adjust the routing information of the vehicle, based on the information pertaining to the network latency in the communication network. In this regard, the control unit continuously monitors the communication network for latency information, which could include metrics such as packet loss, round-trip time (RTT), jitter, and similar indicators of data transmission delays. Herein, if high the network latency (described later) is detected, indicating a delay in data transmission, the control unit recalculates and updates the routing information of the vehicle to mitigate potential disruptions. For example, in regions with high network latency, the control unit may prioritize routes with reduced reliance on real-time communication, selecting pre-determined or pre-mapped routes to maintain operational stability. Conversely, in regions with low network latency, the control unit can enable real-time routing adjustments, leveraging real-time data for optimal navigation. In this regard, the recalculated routing information is communicated to the vehicle via the communication network, ensuring seamless operation even under varying latency conditions. It will be appreciated that dynamically adjusting the routing information based on the network latency ensures uninterrupted and stable operation of the vehicle even in regions with unreliable or delayed communication. It will also be appreciated that leveraging pre-mapped routes during high-latency conditions improves operational reliability, while utilizing real-time data during low-latency conditions optimizes navigation efficiency.

A technical effect of the aforementioned feature is that the system enhances operational reliability and safety by dynamically adapting the routing information of the vehicle to account for the network latency, ensuring consistent performance and minimizing disruptions due to delayed or unreliable data.

Throughout the present disclosure, the term *"command"* refers to a specific instruction issued by the operator unit to the control unit, which defines and directs specific operational actions of the vehicle within the operational area. For example, the at least one command may pertain to authentication, ensuring that only authorized instructions are processed and executed, thereby securing operation of the system. The at least one command may include actions for example, such as initiating, halting, adjusting movement of the vehicle, steering, speed, or other operational parameters necessary for achieving desired path for the vehicle. The at least one command can be provided based on the predefined route of the vehicle, current state of the vehicle, situational awareness data received from the plurality of sensors, and similar. Herein, once the routing information has been determined, the control unit is configured to navigate the vehicle based on the at least one command received from the operator unit. In this regard, the control unit is configured to process the at least one command in conjunction with the real-time data collected from the plurality of sensors and the digital twin of the operational area to control the vehicle's trajectory and ensure it follows prescribed path. A technical effect of this configuration is that it allows for precise, real-time navigation of the vehicle, ensuring that the vehicle remains on its route, avoids obstacles, and responds dynamically to any changes in the operational area. Additionally, it enhances the overall safety of the marshalling process by ensuring movements of the vehicle are tightly coordinated with the operator unit's commands and real-time situational data.

For example, in the operational area managed by an autonomous vehicle marshalling system (AVMS), with predefined routes like Route 1, Route 2, Route 3, Route 4, and Route 5) facilitate efficient vehicle movement between key points such as docks, storage bays, and loading/unloading zones. In this regard, a vehicle designated by V-01 may be initially stationed at dock A within the operational area managed by the AVMS. The operator unit may receive an instruction to transport a cargo container to storage bay B and based on said instruction, the operator unit may generate routing information for the vehicle. In this regard, the operator unit may send the at least one command to the control unit which may be *"proceed the vehicle from dock A to storage bay B via Route 3".* As the vehicle begins its journey, the plurality of sensors may detect a blocked segment along route 3 due to pedestrian activity. The operator unit may recalculate the optimal path and may send a revised command to the control unit, which may be *"reroute the vehicle via Route 5 to avoid obstruction and continue to storage bay B".* In this regard, the control unit processes this command, integrates it with the real-time digital twin of the operational area, and adjusts the vehicle's trajectory, steering, and velocity to follow Route 5 safely. Upon reaching the storage bay B, the operator unit may send a precision command, which may be aligned with storage bay B at a 15 degrees angle and halt 2 meters from unloading dock. After successfully completing the task, the vehicle may send a status update to the operator unit, which may issue a final command to the control unit *"return the vehicle to dock A via Route 2 for next mission".* This step-by-step process highlights coordination between the operator unit, the control unit, and the vehicle, leveraging situational awareness, real-time data, and dynamic routing to ensure safe and efficient operations of the vehicle within a complex environment.

Throughout the present disclosure, the term *"safety zone"* refers to a predefined area surrounding the vehicle that is designated to ensure safe operation and collision avoidance. Notably, the safety zone encompasses a critical safety zone and a buffer safety zone (described later). The safety zone allows the vehicle to operate safely without risking collisions with the object. In this regard, once the vehicle is in motion, the control unit is configured to determine the safety zone that surrounds the vehicle, based on the at least one vehicle parameter for example, such as its speed, acceleration, dimensions, trajectory, and similar. This safety zone is a virtual perimeter that adapts in real-time, expanding or contracting according to current operational state of the vehicle and in proximity to other objects or obstacles in the operational area. The determination of the safety zone integrates data from the digital twin of the operational area and real-time inputs from the plurality of sensors to ensure an accurate positioning and responsiveness. A technical effect of this configuration is that it enhances operational safety of the vehicle by establishing the buffer zone to pre-empt collisions, enabling an immediate actions such as deceleration, stopping, rerouting, and similar, in response to any potential hazards detected within the safety zone. It will be appreciated that adaptive nature of the safety zone, which adjusts based on the at least one vehicle parameter, ensures optimal utilization of the available space in the operational area, thereby improving overall traffic flow and efficiency.

In an example, consider a vehicle operating within the operational area with a current speed of 10 meters per second (m/s). The plurality of sensors installed in the operational area may detect dimensions of the vehicle (i.e., 4 meters long, 2 meters wide) and a trajectory (i.e., a straight path heading west). Simultaneously, the plurality of sensors may identify an obstacle (e.g., a pedestrian) 15 meters ahead of the vehicle along its trajectory. In this regard, the control unit processes said parameters of the vehicle, such as its speed, acceleration, dimensions, and trajectory, along with real-time data collected from the plurality of sensors. Based on the vehicle's current speed and its estimated stopping distance, the control unit may calculate a minimum safe distance in front of the vehicle. Similarly, the vehicle's width and trajectory are used to define lateral boundaries, ensuring sufficient clearance on either side. Using this information, the control unit may create a virtual safety zone around the vehicle (i.e., around the dimensions of the vehicle), wherein the safety zone may extend 12 meters ahead of the vehicle, with an additional lateral margin of 1 meter on each side, accounting for potential trajectory deviations. As the pedestrian is detected within calculated safety zone, the control unit may initiate commands to slow the vehicle, stop it, or adjust its trajectory to avoid the obstacle, ensuring safe operation without collisions.

Optionally, the at least one vehicle parameter comprises at least one of: a speed of the vehicle, a route followed by the vehicle, a turning rate of the vehicle, a type of the vehicle, an environmental condition of the operational area, a traffic density in the operational area, a load of the vehicle. In this regard, the control unit is configured to determine the safety zone by analysing the speed of the vehicle in real-time. The speed of the vehicle plays a crucial role in determining the safety zone, as faster vehicles typically require more space to react to obstacles in the operational area. Thus, the control unit assesses current speed of the vehicle and establishes the safety zone around the vehicle that ensures it maintains an adequate buffer to prevent collisions. For example, at higher speeds, the control unit may set a larger safety zone to account for the vehicle's higher velocity, allowing enough time for response to potential obstacles, and vice-versa.

Optionally, the control unit is configured to determine the safety zone based on the route followed by the vehicle. The route followed by the vehicle is essential because different types of roads or paths (for example, such as straight roads, sharp curves, intersections, and similar) may present varying levels of risk or require different operational characteristics. In this regard, the control unit uses navigation of the vehicle and layout of the route to determine the safety zone, ensuring that the vehicle maintains a safe distance from potential hazards based on its route.

Moreover, the term *"turning rate"* refers to an angular velocity at which the vehicle changes its orientation relative to a fixed reference, typically measured in degrees or radians per unit of time (for example, degrees per second or radians per second). The turning rate of the vehicle refers to how sharply the vehicle is turning, and it directly influences the safety zone. Herein, when the vehicle is turning at a high rate (i.e., making sharp or rapid turns), the control unit may determine the safety zone to be larger, as the trajectory of the vehicle changes more quickly, and objects in the operational area may come within a path of the vehicle. However, sharp turns increase the likelihood of collision with the object, even if the object is outside the path of the vehicle. Thus, the control unit calculates the turning rate of the vehicle and determines the safety zone to provide enough space for the vehicle to safely execute the turn without colliding with nearby objects.

Optionally, the control unit is configured to determine the safety zone based on the type of vehicle being operated. The type of the vehicle is an important factor in determining the safety zone, as different types of vehicles (for example, such as sedans, trucks, buses, motorcycles, and the like) have varying sizes, shapes, and capabilities. In other words, a large vehicle like a truck would require the larger safety zone because it has a longer stopping distance and a larger turning radius compared to a small vehicle like a motorcycle or a sedan. Thus, the control unit uses the type of the vehicle being operated within the operational area and then determines the safety zone accordingly.

Optionally, the control unit is configured to determine the safety zone based on the environmental condition of the operational area. These conditions may include factors, but are not limited to, such as weather (like rain, fog, snow, and similar), road surface quality (like wet, icy, dry roads, and similar), and visibility (like night-time, low-light conditions, and similar). The control unit accounts for these factors to determine the safety zone, ensuring the vehicle can respond effectively to environmental challenges and avoid potential hazards, even under adverse conditions. For example, in poor weather conditions or on slippery roads, the control unit may set the larger safety zone and vice-versa.

Optionally, the control unit monitors traffic conditions via the plurality of sensors and is configured to determine the safety zone accordingly. Typically, areas with higher traffic density present more obstacles and a higher likelihood of sudden stops or lane changes. The control unit considers the number and proximity of surrounding vehicles to determine the safety zone. For example, in high-traffic situations, the control unit may set the larger safety zone to provide adequate space for the vehicle to avoid potential collisions with other vehicles or objects. Conversely, if the traffic may be sparse, the control unit may set a smaller safety zone, as there are fewer vehicles to account for, and the likelihood of sudden movements is lower.

Optionally, the control unit is configured to determine the safety zone by analysing the load carried by the vehicle, which can affect its handling and braking characteristics. Typically, a heavier load may affect the ability of the vehicle to maneuver quickly or respond to sudden changes in the operational area. The control unit takes into account the vehicle's load and determines the safety zone that ensures the vehicle has enough operational space to react effectively, even with a loaded vehicle. For example, a vehicle carrying with a heavy load, the control unit may set the larger safety zone to ensure safe movement and maneuverability. Conversely, when the vehicle may be carrying a lighter load, the control unit may set a smaller safety zone to ensure safe movement and maneuverability.

It will be appreciated that determining the safety zone based on the at least one vehicle parameter ensures that the system can accurately assess the operational area and adapt the safety zone to align with real-time dynamics and conditions of the vehicle. It will also be appreciated that incorporating the at least one vehicle parameter enables a holistic analysis, allowing the control unit to determine the safety zone that is robust and contextually appropriate. This improves the overall operational safety of the vehicle, minimizes the risk of collisions, and ensures smooth navigation in diverse environments. A technical effect of the aforementioned feature is that the system enhances the accuracy and adaptability of determining the safety zone by considering a comprehensive range of the vehicle and environmental parameters, thereby ensuring safe and efficient operation of the vehicle across diverse operational scenarios.

Throughout the present disclosure, the term *"network latency"* refers to a time delay in transmission of data between the operator unit and the control unit and/or between the control unit and other components of the system. The network latency can be influenced by various factors, for example, such as communication bandwidth, network traffic, processing delays, physical distance between communicating devices, and similar. Notably, a low network latency ensures that decisions can be made quickly, thereby enabling an accurate and safe control of the vehicle. Faster decision-making allows for quicker reactions to changing situations while the vehicle is in motion, thereby enhancing overall safety and operational efficiency. The term *"network traffic regulator"* refers to a module configured to monitor, manage, and control flow of data within the communication network. The network traffic regulator is responsible for assessing parameters such as network latency, bandwidth usage, data congestion, and similar. Herein, the network traffic regulator ensures reliable and efficient communication between the operator unit and the control unit of the vehicle, thereby supporting safe and uninterrupted operations of the vehicle. The network traffic regulator continuously monitors data transmission speed, and data traffic within the communication network and ensures that the data from the plurality of sensors are transmitted efficiently to maintain optimal network performance. Moreover, the network traffic regulator periodically measures the network latency by monitoring a time taken by the data from the plurality of sensors to reach the control unit. This measurement is typically done over the given time period to capture variations in the network latency that may occur due to network congestion, a sudden spike in the data traffic, and similar. Thereby, determining the network latency, the control unit identifies the performance of the communication network, as a high latency in the communication network leads to a delay in the data transmission.

Throughout the present disclosure, the term *"predetermined threshold latency"* refers to a predefined value set for an acceptable variation in the network latency within the communication network. The predetermined threshold latency represents a maximum acceptable delay in the data transmission, and it is defined based on operational requirements, and safety considerations. Optionally, the predetermined threshold latency lies in a range of 250 milliseconds to 350 milliseconds. The predetermined threshold latency may, for example, lie in a range from 250, 251, 252, 254, 257, 260, 265, 270, 280, 290, 300, 315, 330, or 345 milliseconds up to 255, 280, 295, 310, 320, 330, 335, 340, 344, 347, 349 or 350 milliseconds.

As the network latency measurements are collected, the control unit compares a current network latency for the given time period with the predetermined threshold. When it is detected that there is a change in the network latency for the given time and it also exceeds the predetermined threshold latency, then the control unit increases the size of the safety zone by recalculating boundaries of the safety zone and providing an additional buffer space around the vehicle. Notably, larger the safety zone, greater would be an area around the vehicle within which the vehicle remains aware of any potential hazards. This increase in size ensures that the vehicle can react appropriately to any potential hazards or changes in the operational area, thereby compensating for delay in communication caused by the increase in the network latency. For instance, if the network latency spikes due to heavy traffic, the control unit will dynamically increase the safety zone to allow more time for response of the vehicle. A technical effect of this feature is that it enhances the safety and reliability of operation of the vehicle by adapting the size of the safety zone in real-time based on network conditions. This mechanism ensures that the vehicle operates with a consistent safety buffer, preventing accidents caused by delayed communication and maintaining smooth navigation, regardless of network performance. Moreover, when it is detected that a change in the network latency for the given time period does not exceed the predetermined threshold latency, the size of the safety zone remains unchanged.

Optionally, the safety zone comprises a critical safety zone that is in front of the vehicle, and a buffer safety zone that is adjacent to the critical safety zone, wherein the size of the safety zone is increased by increasing a size of the critical safety zone, based on the change in the network latency. In this regard, the term *"critical safety zone"* refers to an area in front of the vehicle that is considered essential for collision avoidance and safe operation for the vehicle. The critical safety zone is a most sensitive and dynamically adjusted area within the safety zone, with its size directly influenced by factors such as the network latency. The critical safety zone is designed to provide the vehicle with necessary space to react to immediate obstacles, hazards, and similar, thereby ensuring that the vehicle has sufficient time to stop, change direction, and/or take evasive action based on the real-time data and the at least one command from the operator unit. Moreover, the term "*buffer zone*" refers to an area adjacent to and surrounding the critical safety zone, extending beyond it to further ensure safe operation of the vehicle. The buffer zone helps to accommodate minor fluctuations in movement of the vehicle or sudden obstacles detected outside the critical safety zone, allowing the vehicle to maintain a safe distance from potential hazards while still following the predefined route.

Herein, the size of the safety zone is dynamically adjusted by increasing the size of the critical safety zone when a change in the network latency is detected. Specifically, the control unit monitors the network latency, which impacts responsiveness of data exchange between the operator unit, the control unit, and the vehicle. In this regard, if an increase in the network latency is identified, indicating a delay in receipt of the at least one command or updates from the plurality of sensors, the control unit expands the critical safety zone, particularly in front of the vehicle, to provide a larger margin for detecting and mitigating potential collisions. This proactive adjustment ensures that the vehicle operates safely despite communication delays, allowing additional time for data processing and decision-making. It will be appreciated that this approach enhances the reliability and robustness of the system by ensuring that navigation of the vehicle and avoidance of the object remain precise and effective, even in the presence of fluctuating network conditions.

For example, a vehicle may be navigating within the operational area managed by the system. During normal operation of the vehicle, the network latency between the operator unit and the control unit of the vehicle may be minimal, enabling real-time communication and allowing the critical safety zone to extend 2 meters ahead of the vehicle. In this regard, as the vehicle approaches a congested section of the area, the control unit may detect an increase in the network latency due to high data traffic. In response, the control unit of the system may dynamically increase the size of the critical safety zone to 4 meters to an account for the delay in communication. This adjustment provides the vehicle with an extended buffer to react effectively to any obstacles or changes within its path. In this case, if a pedestrian enters the critical safety zone, the increased size of the critical safety zone ensures sufficient time for the control unit of the vehicle to process the delay, halt the vehicle, and prevent a potential collision. This adaptation maintains safe operation of the vehicle and mitigates risks associated with delayed communication under varying network conditions.

A technical effect of the aforementioned feature is that it enhances the operational safety of the vehicle by dynamically compensating for delays in communication caused by the network latency, thereby ensuring a sufficient reaction time for detection and avoidance of the object.

Notably, the control unit is configured to continuously monitor the operational area for the presence of the object by using the data from the plurality of sensors and the digital twin of the operational area. In this regard, when it is detected that the position of the object lies within the safety zone, the control unit processes this information and directly decreases the speed of the vehicle to avoid any collision between with the object. This reduction in speed ensures that the vehicle has sufficient time to assess movement or behavior of the object, thereby adjust its trajectory if needed, and/or come to a complete halt if necessary. For example, consider a scenario where the vehicle is navigating within a warehouse. As the vehicle moves towards an unloading station, a forklift may unexpectedly cross its path and enters the safety zone. The plurality of sensors may detect presence of the forklift, and sends this information to the control unit. In this regard, recognizing the potential for a collision, the control unit may be configured to decrease the speed of the vehicle, to allow for assessing movement of the forklift. If the forklift may move away from a path of the vehicle, the control may resume normal speed of the vehicle. However, if the forklift halts directly in its trajectory, the control unit may be configured to reduce the speed of the vehicle and may stop the vehicle completely, ensuring safe operation within the warehouse. This capability minimizes accidents, maintains workflow continuity, and enhances the operational safety of an autonomous vehicle system.

Optionally, the object is any one of: another vehicle, a pedestrian, a barrier, an animal, an equipment, a traffic cone, a pothole. A technical effect of this feature is that it enables the system to dynamically and accurately respond to multiple types of objects in the operational area, thereby ensuring navigation of the vehicle is safe and efficient. This classification capability ensures that the vehicle can adapt its behavior based on the type and characteristics of the object. For example, when the object may be the pedestrian, the control unit may prioritize safety by slowing down the vehicle promptly or halting entirely, while the static object such as the traffic cone may require only a slight adjustment in trajectory. In the case of the barrier, the control unit may command the vehicle to stop or take an alternative path to prevent the collision. Similarly, detecting the another vehicle within the safety zone prompts cooperative maneuvering, while the presence of the pothole may necessitate adjusting the vehicle's suspension or path to avoid damage. This feature ensures smooth and uninterrupted navigation by mitigating risks associated with the multiple types of objects commonly encountered in the operational area, such as in warehouses, industrial zones, public spaces, and similar. It also improves the reliability and adaptability of the vehicle, reducing the likelihood of collisions, minimizing delays, and ensuring effective operation in complex and unpredictable environments.

Optionally, the speed of the vehicle is decreased, based on at least one of: the size of the safety zone, the change in the network latency, a speed of the object. In this regard, when the safety zone increases, (for example, due to high network latency or complex environmental conditions), the control unit needs to adjust the speed of the vehicle to ensure that there is an adequate reaction time to the object within the safety zone. In other words, a larger safety zone means more space needs to be covered for detection and evaluation, necessitating a slower vehicle speed. This ensures that the vehicle has sufficient time to react and avoid potential collisions in the operational area. It will be appreciated that this dynamic adjustment of the speed of the vehicle based on the size of the safety zone ensures that the vehicle operates safely in a variety of environmental conditions.

Optionally, when an increase in the network latency is detected, the control unit recognizes that there will be a delay in receiving data from the plurality of sensors or transmitting control signals. As a result, the vehicle needs to slow down to give the control unit more time to process data and make decisions to avoid potential obstacles. The control unit then dynamically adjusts the speed of the vehicle based on the increase in the network latency. Thus, a significant delay will trigger a more substantial reduction in the speed to ensure that even with the communication delay, the vehicle can still react in a timely manner to changes in the operational area. It will be appreciated that this approach ensures that the vehicle remains responsive and safe, even when there are fluctuations in network conditions. By decreasing the speed in response to the network latency, the system ensures that communication delays do not result in unsafe behavior of the vehicle. This proactive adjustment of the speed provides operational resilience, especially in environments with potentially unreliable network connections, ensuring the vehicle continues to operate safely under less-than-ideal conditions.

Optionally, when the object is detected within the safety zone, the control unit evaluates its speed and position relative to the vehicle. If the object is moving rapidly towards the vehicle which means that the object is approaching the vehicle at a fast speed. The closer the object gets, the less time the vehicle has to make any necessary adjustments, such as changing direction or stopping. In this regard, the control unit will trigger a more substantial reduction in the speed which means that in response to this fast-moving object, the control unit will instruct the vehicle to slow down more significantly. This is done to ensure the vehicle has enough time to assess the situation, make a safe manoeuvre, and/or come to a complete stop if necessary. Conversely, if the object is moving slowly or not directly threatening the path of the vehicle, the reduction in speed may be less significant. Thus, the speed of vehicle is adjusted dynamically based on the risk level posed by the speed and direction of the object, ensuring that the vehicle can safely navigate within the operational area without abrupt movements that could cause accidents. It will be appreciated that adjusting the speed of the vehicle based on the speed of the object improves the ability of the vehicle to respond appropriately to dynamic conditions in the operational area, ensuring that the vehicle can react effectively to potential hazards and avoid collisions.

A technical effect of the aforementioned feature is that it enables dynamic and adaptive control of the speed of the vehicle, ensuring timely reactions to varying operational conditions such as changes in the size of the safety zone, the network latency, the speed of the object, thereby enhancing overall safety and operational efficiency.

Optionally, the speed of the vehicle is decreased until the vehicle is stopped at a stopping distance from the object, wherein the stopping distance is predetermined based on a type of the object. In this regard, the term *"stopping distance"* refers to a distance between a position of the vehicle when brakes are applied for stopping the vehicle (i.e., when the speed of the vehicle starts decreasing) and a position of the object at a time instant when the vehicle is stopped. Upon detecting the type of the object within the safety zone, the control unit starts decreasing the speed of the vehicle based on said types. The reduction of the speed continues until the vehicle comes to a complete stop at a distance from the object that corresponds to its predetermined stopping distance, which varies based on the type of the object. Examples of the type of the object may include, but are not limited to, the dynamic object, the static object, and a semi-static object.

In this regard, when the plurality of sensors detect the dynamic object within the safety zone, then the dynamic object requires a larger stopping distance due to their movement and potential for unpredictable behavior. Therefore, the control unit calculates the larger stopping distance to account for the possible movement of the dynamic object, ensuring that the vehicle does not stop too close to the dynamic object, leaving enough space for any anticipated changes in a movement of the object. For example, for the dynamic object, the stopping distance may be 60 centimetres. In this regard, consider a scenario where the vehicle may be approaching a pedestrian walking in a crosswalk. Once the plurality of sensors may detect the pedestrian within the safety zone, the control unit may start decreasing the speed of the vehicle. As the pedestrian may be moving, the control unit may calculate a larger stopping distance of 60 centimetres to account for potential movement of the pedestrian. This ensures that the vehicle does not stop too abruptly or too close to the pedestrian, providing sufficient space in case the pedestrian moves unexpectedly or changes direction. As the vehicle decelerates, may stop 60 centimetres away from the pedestrian, maintaining a safe distance to minimize the risk of collision. It will be appreciated that determining the larger stopping distance for the dynamic object ensures enhanced safety by accounting for their movement and potential for unpredictable behavior.

Conversely, when the plurality of sensors detect the static object within the safety zone, the control unit determines that a shorter stopping distance is sufficient because no movement is anticipated from the static object. For example, for the static object, the stopping distance may be 35 centimetres. In this regard, consider a scenario where the vehicle may be approaching a wall within the safety zone. Once the plurality of sensors detects the wall within the safety zone, the control unit may start decreasing the speed of the vehicle. Since the wall is stationary, the control unit may stop the vehicle at the shorter stopping distance of 35 centimetres away from the wall. The shorter stopping distance allows the vehicle to come to a safe stop without unnecessary delay, thereby efficiently using available space while ensuring safety. In this way, the system dynamically adjusts the stopping distance based on the type of the object, thereby enhancing adaptability and ensuring safe and efficient operation of the vehicle. It will be appreciated that determining the shorter stopping distance for the static object optimizes the efficiency of braking process of the vehicle by reducing unnecessary delays in coming to a stop.

A technical effect of the aforementioned feature is that the system enhances safety and operational efficiency by dynamically adjusting the stopping distance of the vehicle based on the type of object, thereby ensuring an appropriate spacing for both the static object and the dynamic object. This adaptability reduces the risk of collisions while optimizing response times.

Optionally, the control unit is configured to change the stopping distance, based on at least one of: a change in the size of the safety zone, a speed of the object. In this regard, the control unit monitors the size of the safety zone in real-time using input from the plurality of sensors. When the change in the size of the safety zone is detected, the control unit recalculates the stopping distance accordingly. Herein, if the size of the safety zone increases due to factors such as reduced visibility, increased environmental risks, slower network response times, and similar, the control unit extends the stopping distance. This ensures that the vehicle maintains an additional buffer to account for the enlarged zone of potential risk. Conversely, if the size of the safety zone decreases indicating a more confined or less risky environment, the control unit decreases the stopping distance to allow for efficient operation of the vehicle without compromising safety. Thus, the control unit dynamically modifies the stopping distance to align with dimensions of an updated safety zone, ensuring an optimized balance between safety and operational efficiency. It will be appreciated that the system provides an enhanced adaptability to varying environmental conditions, ensuring that the vehicle responds appropriately to an increased or decreased risk levels. It will also be appreciated that the dynamic adjustment of the stopping distance based on the size of the safety zone ensures that the vehicle can navigate efficiently in both congested and safer environments without compromising safety.

Optionally, the control unit utilizes the data from the plurality of sensors to track the speed of object within the safety zone. Notably, the speed of the object plays an essential role in determining an appropriate stopping distance needed to avoid a potential collision between the vehicle and the object. In this regard, when the plurality of sensors detect a high-speed object, such as a fast-moving vehicle, the control unit adjusts the stopping distance to a longer value, ensuring the vehicle has adequate time and space to stop without risking a collision. In other words, the control unit calculates the stopping distance based on a velocity of the object, anticipating that faster-moving objects may have more unpredictable motion or require additional time to safely stop. Conversely, when the plurality of sensors detect that the object is moving at a low speed, the control unit recalculates and sets a shorter stopping distance, as less time and space are necessary to bring the vehicle to a stop. Moreover, the control unit continuously updates the stopping distance as the speed of the object changes, allowing for dynamic recalculation in real-time. This ensures that the stopping behavior of the vehicle is consistently aligned with the movement of the object, maintaining safety while optimizing response time. It will be appreciated that dynamically adjusting the stopping distance based on the speed of the object improves safety by accounting for both high-speed and low-speed objects, ensuring that the vehicle has an appropriate response distance in all scenarios. It will also be appreciated that continuous real-time recalibration of the stopping distance enhances operational efficiency by ensuring that the vehicle can adapt to rapid changes in the speed of the object, thereby minimizing unnecessary delays while maintaining a safe stopping distance.

A technical effect of the aforementioned feature is that the system enhances safety and adaptability of the vehicle by adjusting the stopping distance based on at least one of: the change in the size of the safety zone, the speed of the object, thereby ensuring an appropriate response to varying conditions and minimizing the risk of collisions.

Optionally, an operator of the operator unit is provided with an interactive user interface, wherein the interactive user interface displays at least one of: the digital twin of the operational area, the routing information, real time positions of the vehicle in the operational area, an availability of drivable routes and parking spaces within the operational area, information pertaining to an active drive mission of the vehicle, information pertaining to a completed drive mission of the vehicle. In this regard, the term *"operator"* refers to an individual or an entity responsible for overseeing, managing, and monitoring the operation of the vehicle through the operator unit. Herein, the operator is equipped with the interactive user interface to monitor and control aspects of the system, such as vehicle routing, management of the operational area, mission execution, and similar. The operator plays an essential role in decision-making, ensuring the system functions optimally and safely within the operational area. Moreover, the term *"interactive user interface"* refers to a component of the system that enables the operator to interact with and control functionalities of the system in real-time. Specifically, the interactive user interface displays essential information such as the digital twin of the operational area, the real-time position of the vehicle, the routing data, a status of active and completed missions, and similar. The interactive user interface allows the operator to input commands, receive feedback form the system, and make informed decisions efficiently, thereby facilitating safe and optimized operation of the system. Optionally, a device is provided with the interactive user interface for enabling the user to at least view said information. Such an interactive user interface can be rendered on a display of the device. Moreover, the term *"active drive mission of the vehicle"* refers to a currently ongoing or in-progress operational task assigned to the vehicle. The active drive mission of the vehicle includes real-time activities for example, such as navigating the vehicle to a specific destination, performing predefined tasks within the operational area, responding to dynamic instructions from the control unit, the operator unit and similar. Moreover, the term *"completed drive mission of the vehicle"* refers to an operational task that has been successfully executed and completed by the vehicle. The completed drive mission of the vehicle includes tasks for example, such as reaching a designated destination, completing specific objectives within the operational area, fulfilling system-assigned responsibilities, and similar. It will be appreciated that such an interface allows the operator to make informed decisions, monitor performance of the vehicle in real time, and adapt to dynamic conditions within the operational area, thereby reducing the likelihood of errors and improving overall mission success rates. It will also be appreciated that this feature supports seamless coordination between the control unit, the vehicle, and the operator unit, enabling proactive management of operations of the vehicle and ensuring optimal utilization of resources in the operational area.

A technical effect of the aforementioned feature is that the system enhances operational efficiency and situational awareness by providing the operator with the interactive user interface that displays critical information, enabling informed decision-making and effective monitoring of activities of the vehicle.

Optionally, when navigating the vehicle, the control unit is further configured to:
detect at least one dynamic object present within a predefined area with respect to a position of the vehicle;
analyse at least one of: a position, a speed, a direction of motion, a path, of the at least one dynamic object, to predict a collision between the at least one dynamic object and the vehicle; and
adjust at least one of: a speed of the vehicle, a route followed by the vehicle, a turning rate of the vehicle, to prevent the collision between the at least one dynamic object and the vehicle.

In this regard, the term *"predefined area"* refers to a spatial region surrounding the vehicle, within which the at least one dynamic object is detected and monitored. Typically, the predefined area is defined by a set of parameters, such as a distance, an angle, specific boundaries, and similar, relative to the position of the vehicle. The size and shape of the predefined area can vary depending on operational context and safety requirements of the vehicle. Optionally, when navigating the vehicle, the control unit is responsible for continuously monitoring and managing the predefined area of the vehicle in real-time. The plurality of sensors arranged within the predefined area detects the presence of the at least dynamic object relative to the position of the vehicle. Once the at least one dynamic object is detected by the plurality of sensors within the predefined area, the control unit analyses several key parameters related to the motion and behavior of said object. This could include the at least one of: the position, the speed, the direction of motion, and the path of the at least one dynamic object. By continuously tracking these characteristics, the control unit can predict potential collisions between the at least one dynamic object and the vehicle, thereby calculating upcoming trajectory of the at least one dynamic object in relation to the vehicle. This enables the system to anticipate and assess collision risks before they occur between the at least one dynamic object and the vehicle. Based on the collision risks being predicted, the control unit takes appropriate action to prevent it. This could involve adjusting various parameters of the movement of the vehicle, such as the speed of the vehicle, the route followed by the vehicle, the turning rate (namely, a rate at which a direction of the vehicle is moving).

In this regard, the control unit can decrease or increase the speed of the vehicle to avoid the collision, allowing the vehicle to slow down or accelerate based on a proximity of the at least one dynamic object. For example, if the control unit detects a pedestrian moving towards a current path of the vehicle, and based on the calculated speed of both the vehicle and the pedestrian, it predicts a potential collision. In response, the control unit may reduce the speed of the vehicle to ensure that the pedestrian has enough time to move out of the current path, thus preventing the collision.

Optionally, the control unit can change the route of the vehicle to avoid the collision with the at least one dynamic object, thereby ensuring that the vehicle navigates safely. For example, if another vehicle may be navigating in the current path of the vehicle, the control unit could determine that continuing on the current path would likely result in a rear-end collision. In such a case, the control unit can redirect the vehicle to an alternate route, (such as a bypass or a side road), thereby ensuring safe operation of the vehicle.

Optionally, in cases where a change in direction of the vehicle is required, the control unit is configured to modify the turning rate of the vehicle to avoid the collision with the at least one dynamic object, thereby guiding the vehicle along a safer path. For example, if the vehicle is approaching a sharp turn and detects that a cyclist is crossing the current path of the vehicle, the control unit can adjust the turning rate of the vehicle to maneuver around the cyclist safely, thereby reducing the risk of the collision. In such cases, if the vehicle is turning left and the cyclist is approaching from right, the control unit can increase the turning rate to avoid the cyclist and guide the vehicle safely. Thus, by analysing the real-time data and adjusting movement of the vehicle, the control unit ensures that the vehicle operates safely, even in dynamic environments with unpredictable obstacles.

A technical effect of the aforementioned feature is that the control unit enables the vehicle to autonomously and dynamically adjust its navigation parameters in response to real-time environmental conditions, thereby improving collision avoidance, safety, and overall operational efficiency. This results in a more responsive and adaptive autonomous vehicle system that can proactively mitigate risks posed by the at least dynamic object.

Optionally, when navigating the vehicle, the control unit is further configured to park the vehicle in a parking space of the operational area, at a given stopping distance from another vehicle present in the parking space of the operational area. In this regard, the term *"parking space"* refers to a designated area within the operational area (such as a parking lot, or any controlled space), that is intended for the parking of the vehicle. Typically, the parking space is defined by physical boundaries or markings that outline the area where the vehicle is to be positioned. The parking space accommodates a size of the vehicle and provides sufficient clearance for the vehicle to be parked safely, ensuring that it does not obstruct other vehicles or obstacles within the operational area. Moreover, the term *"given stopping distance"* refers to a predefined or dynamically calculated distance maintained between the vehicle being navigated and another vehicle present within the parking space of the operational area. The given stopping distance ensures sufficient clearance for safe parking, maneuvering, and accessibility, while preventing potential collisions or obstructions in the parking space. Optionally, the control unit is configured to park the vehicle in the parking space of the operational area by leveraging inputs from the plurality of sensors. In this regard, once the vehicle approaches the parking space, the control unit calculates an available space and determines the given stopping distance for the vehicle relative to the other vehicle already present in the parking space. This involves evaluating the distance between the vehicle and any adjacent objects to ensure that there is sufficient clearance to safely park without collision. The control unit uses predefined parameters or safety thresholds, which may include a minimum stopping distance based on the size of the vehicle, the speed, and environmental conditions. To achieve the desired parking maneuver, the control unit adjusts the speed, a steering angle, and a braking force of the vehicle. The control unit continuously monitors the trajectory and the speed of the vehicle to ensure that the given stopping distance is maintained accurately. Upon reaching the given stopping distance, the control unit initiates braking to bring the vehicle to a stop precisely within the parking space, maintaining a safe distance from the other vehicle. This dynamic control of the motion of the vehicle ensures that said vehicle parks accurately within the parking space while adhering to safety standards. It will be appreciated that the control unit ensures an accurate parking of the vehicle within the parking space while maintaining safety through precise calculation and adherence to the given stopping distance. This enhances operational efficiency by leveraging inputs from the plurality of sensors to dynamically assess and respond to the surrounding environment. For example, if the given stopping distance may set to 50 centimeters, the control unit may utilize inputs from plurality of sensors to detect the presence and position of the other vehicle. Based on this data, the control unit may calculate an optimal stopping point where the vehicle may be 50 centimeters away from the other vehicle, thereby ensuring safe and accurate parking.

A technical effect of the aforementioned feature is that it enables the vehicle to autonomously park within the parking space while ensuring a safe distance from other parked vehicles. This minimizes the risk of accidental collisions or damage during parking, thereby improves parking efficiency, and enhances safety, especially in high-density environments.

The present disclosure also relates to the method as described above. Various embodiments and variants disclosed above, with respect to the aforementioned first aspect (namely, the aforementioned system), apply *mutatis mutandis* to the method.

The present disclosure also relates to the computer program product as described above. Various embodiments and variants disclosed above, with respect to the aforementioned first aspect and the second aspect, apply *mutatis mutandis* to the computer program product.

The term *"computer program product"* refers to a software product comprising program instructions that are recorded on the non-transitory machine-readable data storage medium, wherein the software product is executable upon a computing hardware (i.e. the processor) for implementing the aforementioned steps of the method for remote driving of the vehicle.

Examples of the non-transitory machine-readable data storage medium includes, but is not limited to, an electronic storage device, a magnetic storage device, an optical storage device, an electromagnetic storage device, a semiconductor storage device, a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, or any suitable combination thereof.

### DETAILED DESCRIPTION OF THE DRAWINGS

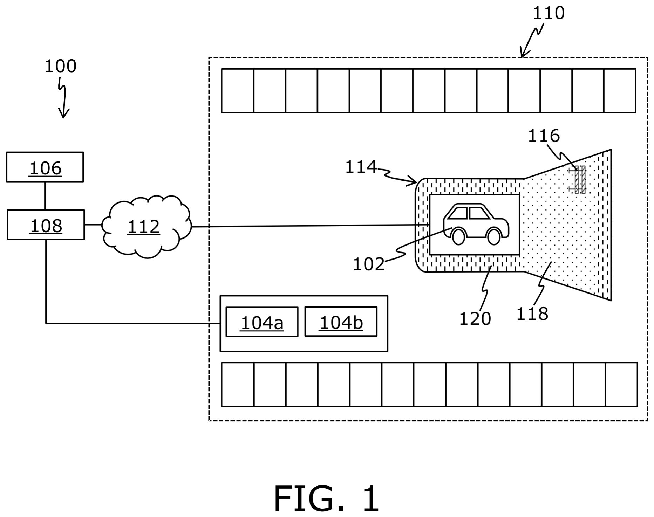

Referring to FIG. 1 illustrated is a block diagram of an architecture of a system **100** for remote driving of a vehicle **102,** in accordance with an embodiment of the present disclosure. With reference to FIG. 1, the system **100** comprises a plurality of sensors (for example, depicted as **104a** and **104b),** an operator unit **106,** and a control unit **108.** Herein, the plurality of sensors **104a, 104b** are arranged in an operational area **110** in which the vehicle **102** is present. The control unit **108** is communicably coupled to the plurality of sensors **104a** and **104b,** the operator unit **106,** and the vehicle **102,** via a communication network **112.** The control unit **108** is configured to perform various operations, as described earlier with respect to the aforementioned first aspect. Moreover, the control unit **108** is configured to determine a safety zone **114** for the vehicle **102,** based on at least one vehicle parameter, wherein the safety zone **114** surrounds the vehicle **102.** Furthermore, the control unit **108** is configured to detect a position of an object **116** (for example, as shown, the object is a barrier) present in the operational area **110.** In this regard, when the control unit **108** detects that the position of the object **116** present in the operational area **110** lies within the safety zone **114,** the control unit is configured to decrease a speed of the vehicle **102** to prevent a collision between the vehicle **102** and the object **116.** Optionally, the safety zone **114** comprises a critical safety zone **118** (for the sake of clarity, depicted using dotted hatching) that is in front of the vehicle **102,** and a buffer safety zone **120** (for the sake of clarity, depicted using vertical stripes hatching) that is adjacent to the critical safety zone **118,** wherein a size of the safety zone **114** is increased by increasing a size of the critical safety zone **118,** based on a change in a network latency.

It may be understood by a person skilled in the art that FIG. 1 includes a simplified architecture of the system **100,** for sake of clarity, which should not unduly limit the scope of the claims herein. The person skilled in the art will recognize many variations, alternatives, and modifications of embodiments of the present disclosure.

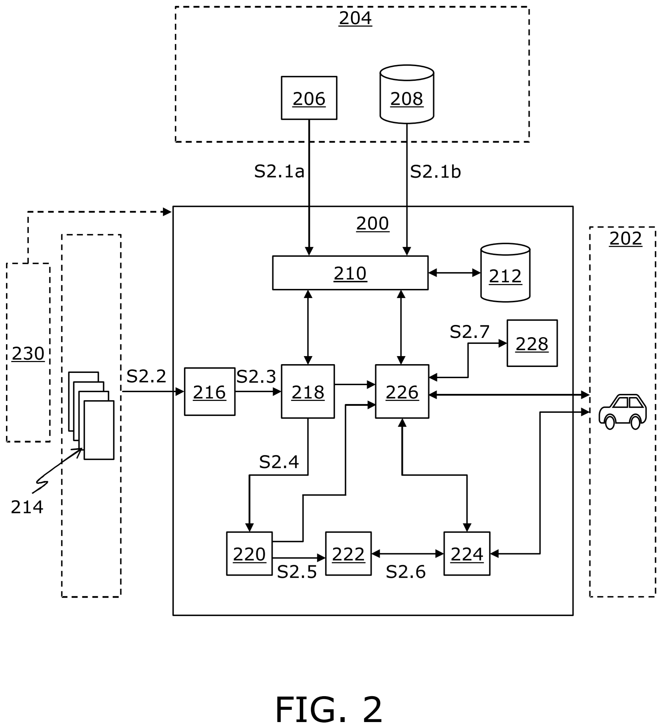

Referring to FIG. 2, illustrated is an exemplary process flow in a system **200** for remote driving a vehicle **202,** in accordance with an embodiment of the present disclosure. Herein, the system **200** is shown to comprise various exemplary modules for managing an autonomous operations of the vehicle. As shown, at **S2.1a** and **S2.1b,** a factory enterprise resource planning (ERP) system **204,** which comprises an ERP control system **206** and an ERP database **208,** serves as a source of high-level operational directives for a mission management module **210.** The ERP system **204** sends task instructions, resource allocations, route information, and similar, to the mission management module **210.** The mission management module **210** provides real-time status of an operational area, for example, such as occupancy of parking spots and driving areas, as well as a route information which the vehicle **202** should follow, and similar. Herein, the mission management module **210** communicates with a route graph database **212,** which contains predefined route information, to plan a path for the vehicle **202** based on mission requirements.

Herein, the system **200** is communicably coupled to a plurality of Light Detection and Ranging (LiDAR) sensors **214.** In this regard, the system **200** collects spatial information from the plurality of LiDAR sensors **214.** The plurality of LiDAR sensors capture a point cloud data, which provides detailed three-dimensional spatial information about the operational area. At **S2.2,** the point cloud data generated by the plurality of LiDAR sensors is transmitted to a LiDAR grabber module **216.** The LiDAR grabber module **216** processes raw data, transforms, filters, and subtracts background noise to ensure only relevant points are retained. At **S2.3,** the processed point cloud data is sent to a LiDAR perception module **218.** The LiDAR perception module **218** clusters said data into objects, thereby detects dynamic and static objects, and tracks them using techniques such as a Kalman filter. Simultaneously, at **S2.4,** a LiDAR vehicle localization module **220** uses the data received from the LiDAR perception module **218** to accurately determine a position of the vehicle **202** in the operational area. In this regard, said position of the vehicle is then send to a driving interface module **222,** which uses this information to guide the vehicle **202.** At **S2.5,** the lidar vehicle localization module **220** also sends data related to the position of the vehicle **202** to an odometry fusion module **224** to provide precise movement tracking. Herein, the odometry fusion module **224** combines multiple sources of position and motion data (e.g., from LiDARs, wheel encoders etc.) to create a more robust and an accurate estimation of the position and movement of the vehicle **202.**

At **S2.6,** an optimal path for the vehicle **202** is calculated using a path tracking module **226.** In this regard, the data related to the optimal path for the vehicle is transmitted to the driving interface module **222,** which sends control commands to the vehicle **202** to adjust its speed, steering, braking, and similar. The driving interface module **222** acts as a control bridge between several modules and the vehicle **202.** The driving interface module **222** ensures that commands generated from the path tracking module **226,** a collision avoidance module **228,** and the mission management module **210** are accurately executed by the vehicle **202.** At **S2.7,** the collision avoidance module **228** receives data from the LiDAR perception module **218** in real-time, thereby analyzes a position of an object present in the operational area. If the object is detected in the operational area, the collision avoidance module **228** sends said data to the driving interface module **226** which dynamically modifies a route of the vehicle **202** or a speed to prevent collisions.

Throughout the process, the system **200** operates in a continuous feedback loop, where real-time data from the plurality of sensors **214,** modules, and a status of the vehicle **202** are dynamically updated to adapt to environmental changes and ensure a safe, efficient operation of the vehicle **202.** Optionally, there is shown an external system **230** which may comprise additional sensors outside a main infrastructure, which could provide additional information such as environmental data and similar to the system **200.**

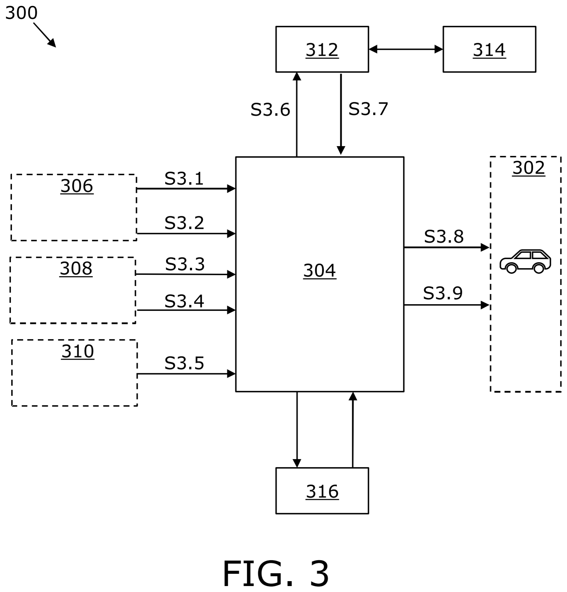

Referring to FIG. 3, illustrated is an exemplary process flow of a vehicle control module **300** in a system for remote driving a vehicle **302,** in accordance with an embodiment of the present disclosure. In this regard, the vehicle control module **300** functions as a real-time decision-making unit for managing an operation for remote driving of the vehicle **302.** The figure depicts a flow of data and control commands between various components. Herein, a driving interface node **304** acts as a central processing unit, integrating input data from a control hub **306,** an automated valet parking (AVP) nodes **308,** a vehicle communication interface **310,** for a current operational state of the vehicle **302.**

As shown, at **S3.1,** the control hub **306** sends specifications of the vehicle **302,** which may include information detailing capabilities and constraints of the vehicle **302.** At **S3.2,** the control hub also sends path snippet, which may include a segment of an intended route of the vehicle **302.** At **S3.3,** the AVP nodes send data related to tracked objects, which may include real-time information of objects detected in operational area of the vehicle **302. At S3.4,** the AVP nodes send data related to tracked vehicle, which include position and state information of the vehicle **302** being monitored. At **S3.5,** the vehicle communication interface **310** sends data related to a state of the vehicle **302** to the driving interface node **304,** thereby offering insights into current operational parameters (e.g., a velocity, an acceleration, and a steering angle) of the vehicle **302.**

At **S3.6,** the driving interface node sends data received from the control hub **306,** the AVP nodes **308,** and the vehicle communication interface **310** to the driving permission module **312.** Herein, the driving permission module **312** communicates with a collision avoidance system **314,** thereby providing an assessment of the operational area. Based on this, the driving permission module **314** determines whether it is safe to proceed with an intended driving actions of the vehicle **302.** In this regard, when it is determined that the operational area where the vehicle **302** is intended to operate is safe, then at step **S3.7,** the driving permission module **314** sends said information to the driving interface node **304.** Moreover, a drive command module **316** communicably coupled with the driving interface node **304,** finalizes a control instructions and provides a drive command back to the driving interface node **304.** Then, at **S3.8,** the driving interface node **304** generates a drive command, which may include specific instructions for the vehicle **302** (for example, such as steering, velocity, acceleration, and similar). Then, at **S3.9,** the driving interface node **304** provides a driving permission to the vehicle **302.** In this way, the process emphasizes safety and precision for remote driving of the vehicle **302.**

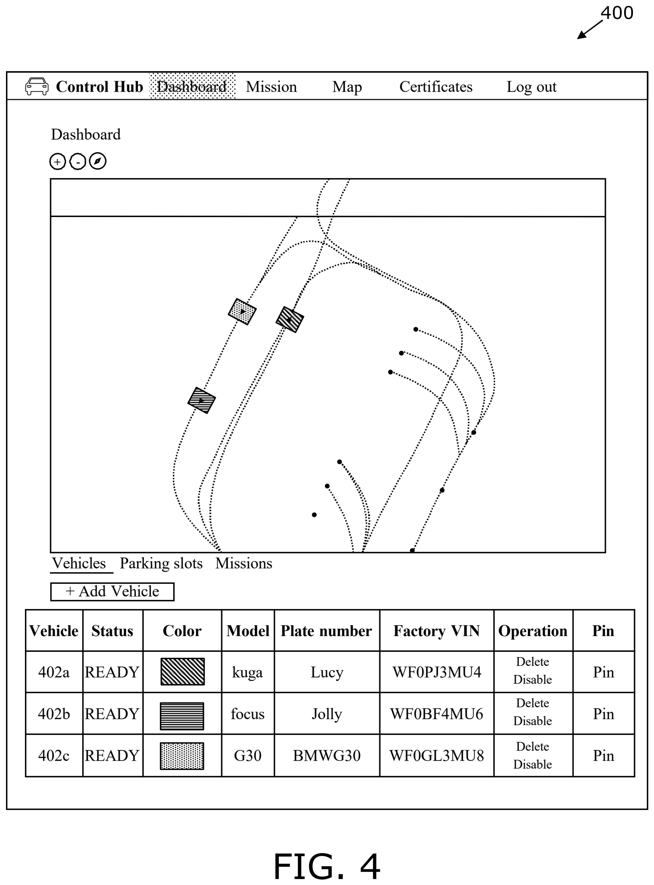

Referring to FIG. 4, illustrated is an exemplary visualization of an interactive user interface **400** rendered on a display of an operator unit, in accordance with an embodiment of the present disclosure. Herein, an operator of an operator unit is provided with the interactive user interface **400,** wherein the interactive user interface **400** displays at least one of: a digital twin of an operational area, a routing information, real time positions of the vehicle in the operational area, an availability of drivable routes and parking spaces within the operational area, information pertaining to an active drive mission of the vehicle, information pertaining to a completed drive mission of the vehicle.

As shown, in an example, the interactive user interface **400** displays operation of three vehicles, such as a first vehicle **402a** (depicted using diagonal stripe hatching), a second vehicle **402b** (depicted using horizontal stripes hatching), and a third vehicle **402c** (depicted using dotted hatching), each uniquely identified by their respective model numbers, license plate numbers, and factory vehicle identification numbers (VINs). The interactive user interface **400** also displays a tabular interface showing vehicle-specific attributes, status, and actions. For instance, the first vehicle **402a** is in a "READY" state. The operator can interact with options like "delete" or "disable" as required for each vehicle.

Moreover, if a potential conflict is detected by a control unit (not shown for the sake of clarity), such as the third vehicle **402c** approaching a route segment currently occupied by the first vehicle **402a,** the control unit dynamically recalculates a route for the third vehicle **402c** to avoid the conflict. The updated routing information is then communicated to the first vehicle **402a,** enabling a safe change in trajectory while the third vehicle **402c** continues its mission without disruption. Simultaneously, the second vehicle **402b** continues to follow its designated route as planned. Thus, the interactive user interface **400** facilitates real-time conflict resolution, optimized routing, and comprehensive mission management, ensuring safe and efficient operations of all the three vehicles within the operational area.

FIGs. 2, 3, and 4 are merely examples, which should not unduly limit the scope of the claims herein. A person skilled in the art will recognize many variations, alternatives, and modifications of embodiments of the present disclosure.

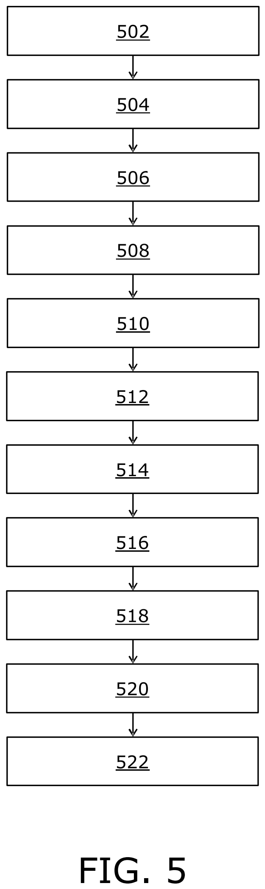

Referring to FIG. 5, illustrated are steps of a method for remote driving of a vehicle, in accordance with an embodiment of the present disclosure. At step **502,** tracking data collected by a plurality of sensors is processed, to create a digital twin of an operational area in which the vehicle is present. At step **504,** information pertaining to an initial position and a target position of the vehicle is received. At step **506,** routing information of the vehicle is determined based on the digital twin of the operational area and the information pertaining to the initial position and the target position of the vehicle. At step **508,** the routing information of the vehicle and the digital twin of the operational area are send to an operator unit. At step **510,** the vehicle is navigated based on at least one command received from the operator unit. At step **512,** a safety zone is determined for the vehicle, based on at least one vehicle parameter, wherein the safety zone surrounds the vehicle. At step **514,** for a given time period, information pertaining to a network latency in a communication network is obtained from a network traffic regulator of the communication network. At step **516,** it is detected when a change in the network latency for the given time period exceeds a predetermined threshold latency. When it is detected that a change in the network latency for the given time period exceeds a predetermined threshold latency, at step **518,** a size of the safety zone is increased, based on the change in the network latency. Optionally, when it is detected that a change in the network latency for the given time period does not exceed the predetermined threshold latency, a size of the safety zone remains unchanged. At step **520,** it is detected when a position of an object present in the operational area lies within the safety zone. When it is detected that a position of an object present in the operational area lies within the safety zone, at step **522,** a speed of the vehicle is decreased to prevent a collision between the vehicle and the object.

Optionally, at the step **516,** when it is detected that a change in the network latency for the given time period does not exceed the predetermined threshold latency, a size of the safety zone remains unchanged. However, even in a case where the size of the safety zone remains unchanged, a speed of the vehicle would be decreased to prevent a collision between the vehicle and the object, when it is detected that a position of the object lies within the safety zone.

The aforementioned steps are only illustrative and other alternatives can also be provided where one or more steps are added, one or more steps are removed, or one or more steps are provided in a different sequence without departing from the scope of the claims herein.

## Claims

1. A system (100, 200) for remote driving of a vehicle (102, 202, 302, 402a-c), wherein the system comprises:
a plurality of sensors (104a-b) arranged in an operational area (110) in which the vehicle is present;
an operator unit (106); and
a control unit (108) communicably coupled to the plurality of sensors, the operator unit, and the vehicle, via a communication network (112), wherein the control unit is configured to:
process tracking data, collected by the plurality of sensors, to create a digital twin of the operational area;
receive, from the operator unit, information pertaining to an initial position and a target position of the vehicle;
determine routing information of the vehicle, based on the digital twin of the operational area and the information pertaining to the initial position and the target position of the vehicle;
send the routing information of the vehicle and the digital twin of the operational area to the operator unit;
navigate the vehicle based on at least one command received from the operator unit;
determine a safety zone (114) for the vehicle, based on at least one vehicle parameter, wherein the safety zone surrounds the vehicle;
obtain, for a given time period, information pertaining to a network latency in the communication network from a network traffic regulator of the communication network;
detect when a change in the network latency for the given time period exceeds a predetermined threshold latency;
when it is detected that a change in the network latency for the given time period exceeds a predetermined threshold latency, increase a size of the safety zone, based on the change in the network latency;
detect when a position of an object present in the operational area lies within the safety zone; and
when it is detected that a position of an object (116) present in the operational area lies within the safety zone, decrease a speed of the vehicle to prevent a collision between the vehicle and the object.

2. The system (100, 200) of claim 1, wherein the speed of the vehicle (102, 202, 302, 402a-c) is decreased, based on at least one of: the size of the safety zone (114), the change in the network latency, a speed of the object (116).

3. The system (100, 200) of claim 1 or 2, wherein the speed of the vehicle (102, 202, 302, 402a-c) is decreased until the vehicle is stopped at a stopping distance from the object (116), wherein the stopping distance is predetermined based on a type of the object.

4. The system (100, 200) of claim 3, wherein the control unit (108) is configured to change the stopping distance, based on at least one of: a change in the size of the safety zone (114), a speed of the object (116).

5. The system (100, 200) any of the preceding claims, wherein the safety zone (114) comprises a critical safety zone (118) that is in front of the vehicle (102, 202, 302, 402a-c), and a buffer safety zone (120) that is adjacent to the critical safety zone, wherein the size of the safety zone is increased by increasing a size of the critical safety zone, based on the change in the network latency.

6. The system (100, 200) of any of the preceding claims, wherein a given sensor from amongst the plurality of sensors (104a-b) is a Light Detection and Ranging (LiDAR) sensor (214).

7. The system (100, 200) of any of the preceding claims, wherein the control unit (108) is configured to dynamically adjust the routing information of the vehicle (102, 202, 302, 402a-c), based on the information pertaining to the network latency in the communication network (112).

8. The system (100, 200) of any of the preceding claims, wherein when navigating the vehicle (102, 202, 302, 402a-c), the control unit (108) is further configured to:
detect at least one dynamic object present within a predefined area with respect to a position of the vehicle;
analyse at least one of: a position, a speed, a direction of motion, a path, of the at least one dynamic object, to predict a collision between the at least one dynamic object and the vehicle; and
adjust at least one of: a speed of the vehicle, a route followed by the vehicle, a turning rate of the vehicle, to prevent the collision between the at least one dynamic object and the vehicle.

9. The system (100, 200) of any of the preceding claims, wherein an operator of the operator unit (106) is provided with an interactive user interface (400), wherein the interactive user interface displays at least one of: the digital twin of the operational area (110), the routing information, real time positions of the vehicle (102, 202, 302, 402a-c) in the operational area, an availability of drivable routes and parking spaces within the operational area, information pertaining to an active drive mission of the vehicle, information pertaining to a completed drive mission of the vehicle.

10. The system (100, 200) of any of the preceding claims, wherein when navigating the vehicle (102, 202, 302, 402a-c), the control unit (108) is further configured to park the vehicle in a parking space of the operational area (110), at a given stopping distance from another vehicle present in the parking space of the operational area.

11. The system (100, 200) of any of the preceding claims, wherein the at least one vehicle parameter comprises at least one of: a speed of the vehicle (102, 202, 302, 402a-c), a route followed by the vehicle, a turning rate of the vehicle, a type of the vehicle, an environmental condition of the operational area (110), a traffic density in the operational area, a load of the vehicle.

12. The system (100, 200) of any of the preceding claims, wherein the object (116) is any one of: another vehicle, a pedestrian, a barrier, an animal, an equipment, a traffic cone, a pothole.

13. A method for remote driving of a vehicle (102, 202, 302, 402a-c), wherein the method comprises:
processing tracking data, collected by a plurality of sensors (104a-b), to create a digital twin of an operational area (110) in which the vehicle is present;
receiving information pertaining to an initial position and a target position of the vehicle;
determining routing information of the vehicle, based on the digital twin of the operational area and the information pertaining to the initial position and the target position of the vehicle;
sending the routing information of the vehicle and the digital twin of the operational area to an operator unit;
navigating the vehicle based on at least one command received from the operator unit;
determining a safety zone (114) for the vehicle, based on at least one vehicle parameter, wherein the safety zone surrounds the vehicle;
obtaining, for a given time period, information pertaining to a network latency in a communication network (112) from a network traffic regulator of the communication network;
detecting when a change in the network latency for the given time period exceeds a predetermined threshold latency;
when it is detected that a change in the network latency for the given time period exceeds a predetermined threshold latency, increasing a size of the safety zone, based on the change in the network latency;
detecting when a position of an object (116) present in the operational area lies within the safety zone; and
when it is detected that a position of an object present in the operational area lies within the safety zone, decreasing a speed of the vehicle to prevent a collision between the vehicle and the object.

14. A computer program product comprising a non-transitory machine-readable data storage medium having stored thereon program instructions that, when executed by a processor, cause the processor to execute steps of a method of claim 13.
